# EUROPEAN PATENT APPLICATION

(11) **EP 1 408 250 A1**
(43) Date of publication of application: **14.04.2004**
(21) Application number: 02425622.4
(22) Date of filing: 11.10.2002
(51) Int. Cl.: F16D 23/06

(54) **Synchronizer for a change gear for vehicles**

(71) Applicant: Gammastamp S.p.A., 10121 Torino (IT)
(72) Inventor: Audisio, Vittorio, 20100 Milano (IT)
(74) Representative: Marchitelli, Mauro

(57) **Abstract**

Synchronizer for a change gear for vehicles, comprising:
- a hub (52) with external teeth (60),
- a control sleeve (54) with internal teeth (68) that engage with the external teeth of the hub (52) in a sliding manner in the axial direction,
- at least one synchronizer ring (56) cooperating with the control coupling (54), and
- at least one pre-synchronization device (10) housed in a seat (64) of the hub (52) and destined to establish a frictional contact with the synchronizer ring (56).

The pre-synchronization device (10) includes a support body (12) that is stationary with respect to the hub (52) and a contact plate that is axially mobile with respect to the support body (12).

## Description

The present invention relates to a synchronizer for a change gear for vehicles, having the characteristics specified in the preamble of the main claim.

In synchronizers according to the prior art, the utilization of pre-synchronization devices destined to establish frictional contact with a synchronizer ring during the preliminary phase of the synchronization operation of the angular velocity of a gear has already been proposed.

The intended object of present invention is to provide an improved pre-synchronization device that is easier to mount and/or that has smoother operation compared to devices according to the prior art.

According to the present invention, this object is achieved thanks to the characteristics specified in the main claim.

This invention will now be described in detail with reference to the enclosed drawings, supplied purely by way of a non-limitative example, in which:
- Figure 1 is an exploded perspective view of a first form of embodiment of a pre-synchronization device according to the present invention,
- Figure 2 is an exploded perspective view illustrating the pre-synchronization device of Figure 1, together with some of the components of a synchronizer for a change gear,
- Figure 3 is a cross-section along the line III-III in Figure 2,
- Figure 4 is a cross-section along the line IV-IV in Figure 3,
- Figure 5 is a perspective view of a second form of embodiment of the pre-synchronization device according to the present invention, and
- Figure 6 is an exploded perspective view of the pre-synchronization device shown in Figure 5.

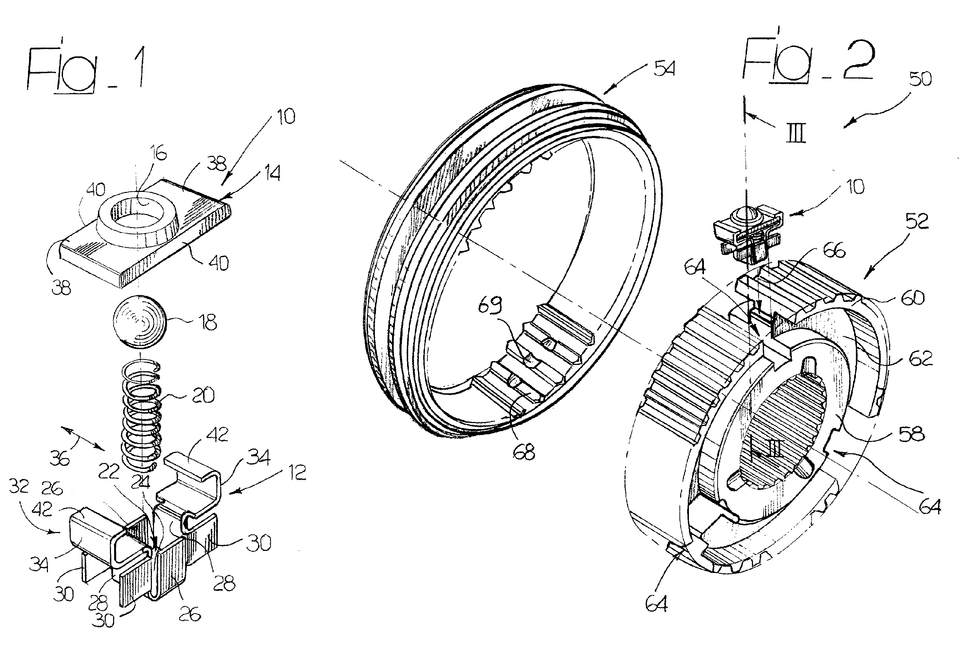

With reference to Figure 1, reference number 10 indicates a pre-synchronization device according to the present invention. The device 10 includes a support body 12 that in the example of embodiment illustrated in Figure 1 is composed of a one-piece element obtained by folding a single piece of sheet metal. The pre-synchronization device 10 includes a plate 14 with a through hole 16 inside which a rolling body consisting of a ball 18 or a roller is housed. An elastic element, consisting of a coil spring in compression 20 for example, is operatively inserted between the sphere 18 and the support body 12.

The support body 12 has a central seat 22 in which the coil spring 20 is housed. The seat 22 is formed by an end wall 24, a pair of parallel front walls 26 a pair of parallel side walls 28. Each of the two side walls 28 has a pair of parallel restraining tabs 30 that extend sideways to the outside with respect to the seat 22.

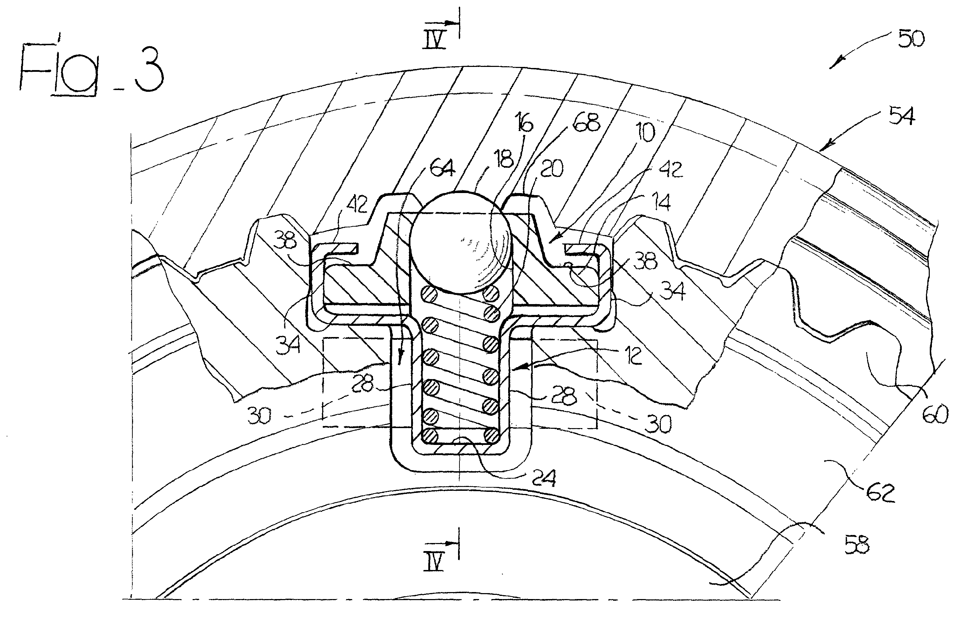

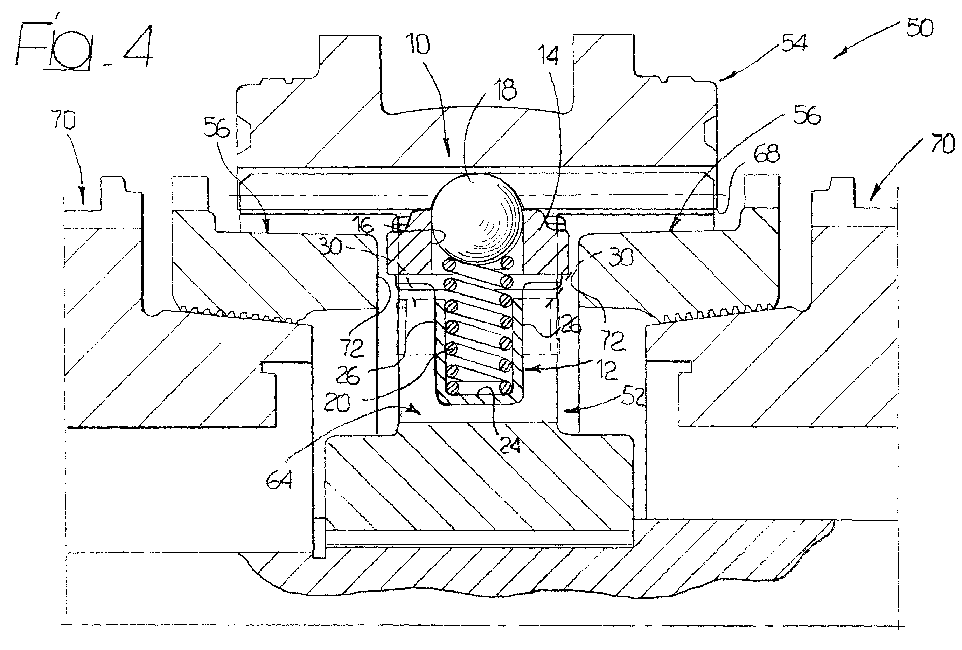

The support body 12 includes a guide part 32 that extends above the seat 22. The guide part 32 is formed by two C-shaped elements 34 that extend from the upper part of the side walls 28. The two C-shaped elements 34 face one another and form a guide channel that is open at the top and which extends in a transversal direction with respect to the restraining tabs 30. The plate 14 is mounted on the guide part 32 of the support body 12 in a manner such that it can move freely with respect to the support body 12 in the transversal direction indicated by the double arrow 36. The side edges 38 of the plate 14 are slidably mounted in the C-shaped parts 34 while the front edges 40 of the plate 14 constitute the friction contact surfaces destined to enter into contact with the respective synchronizer rings. The upper part of the hole 16 in the plate 14 has a diameter smaller than that of the sphere 18, so that, as illustrated in Figures 3 and 4, the sphere 18 only partially projects through the hole 16, but does not completely pass through this hole. The spring 20 pushes the ball 18 upwards inside the hole 16 on the plate 14. The elastic force produced by the spring 20 pushes the plate 14 upwards and tends to keep the plate 14 against the upper tabs 42 of the C-shaped elements 34.

In the form of embodiment illustrated in Figure 1, the support body 12 is obtained by folding in a press, starting from a single piece of sheet metal, pre-cut according to the horizontal layout of the finished part. The plate 14 is made of a metal with a low coefficient of friction. The assembly of the device 10 is accomplished in the following manner: the spring 20 is inserted in the seat 22 and is axially compressed. The ball 18 is inserted in the hole 16 on the plate 14 and the plate is inserted between the C-shaped elements 34 with movement in the transverse direction indicated by the arrow 36. The spring 20 is released as soon as the sphere 18 is centred with respect to the spring 20.

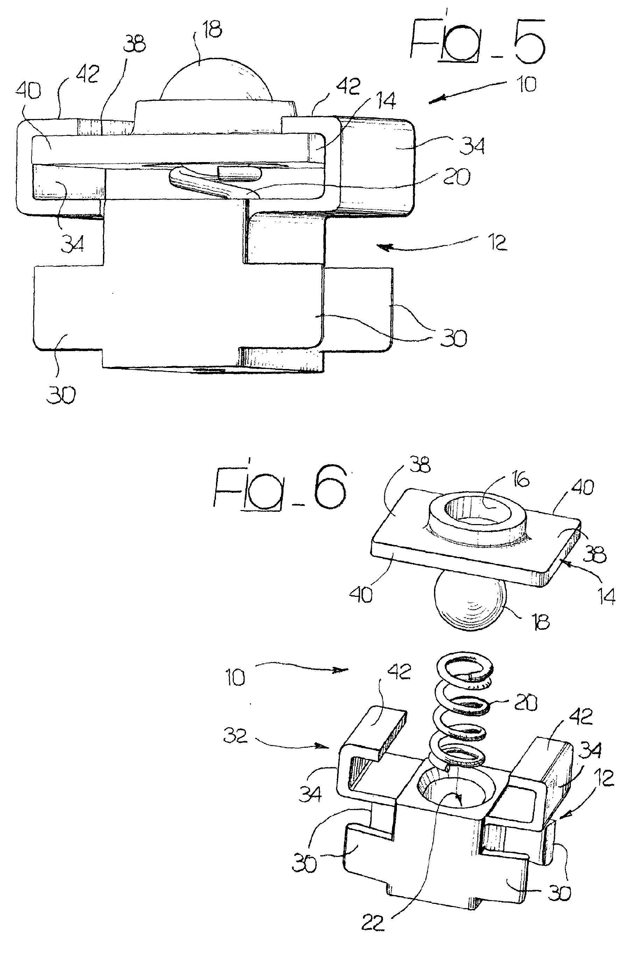

In an alternative form of embodiment, illustrated in Figures 5 and 6, the support body 12 can be composed of a single, monolithic piece of injection-moulded plastic. As can be seen, particularly in Figure 5, the plate 14 has a certain amount of play in the assembled position with respect to the C-shaped elements 34 and is therefore mobile in the vertical direction with respect to the support body 12, under the action of the spring 20.

In an additional variant that is not illustrated, the support body 12 can be formed by two separate components that are fixed together: a first component includes the seat 22 and the restraining tabs 30 and a second component includes the guide part 32 with the C-shaped elements 34. The two components could be equipped with mutually cooperating snap catches to permit the reciprocal assembly of the two parts of the support body 12. This variant permits the assembly sequence to be simplified because the plate 14 and ball 18 are mounted on the guide part 32 while the spring 20 is mounted on the seat 22 and assembly of the device 10 is performed by snap fitting the two parts of the support body 12 together, without the need for axially compressing the spring 20 before inserting the plate 14.

With reference to Figures 2 to 4, the pre-synchronization device 10 according to the present invention is destined to be used in a synchronizer 50 including a hub 52, a control sleeve 54 and a pair of synchronizer rings 56 (Figure 4). As can be seen in Figure 2, the hub 52 has a radially internal part 58 with internal teeth for engaging with a shaft, external teeth 60 and an intermediate portion 62. The hub 52 has three seats 64 each shaped to receive a respective pre-synchronization device 10. Each pre-synchronization device 10 is inserted in the respective seat 64 with a movement in a radial direction from the outside to the inside, as shown by the arrow 66 in Figure 2. The side restraining tabs 30 of the support body 12 are arranged on opposite sides of the intermediate portion 62 in order to block the support body 12 with respect to the hub 52 in the direction parallel to the axis of the hub.

The control sleeve 54 has internal teeth 68 that engage with the external teeth 60 of the hub 52. The sphere 18 of each pre-synchronization device 10 is elastically pressed against a notch 69 formed on the teeth 68 of the control coupling 54.

Two synchronizer rings 56 associated with the respective gears 70 are illustrated in Figure 4. The frontal surfaces 40 of the plate 14 of each pre-synchronization device 10 face the respective surfaces 72 of the synchronizers 56.

In operation, the coupling 54 is moved laterally towards one of the two gears 70 to perform the gear change. During the first phase of the movement of the control sleeve 54, the plate 14 of each pre-synchronization device 10 moves laterally with respect to the support body 12, which remains stationary with respect to the hub 52. During this movement, the frontal surfaces 40 of each plate 14 enter into frictional contact against the corresponding surfaces 72 of the synchronizer ring 56, thereby effecting a synchronization between the angular velocities of the synchronizer ring 56 and hub 52. Proceeding with the lateral movement of the sleeve 54, the synchronizer ring 56 synchronizes the angular velocity of the gear 70 with respect to the hub 52 in the conventional manner.

## Claims

1. A synchronizer for a change gear for vehicles, comprising:
- a hub (52) with external teeth (60),
- a control sleeve (54) with internal teeth (68) that engage with the external teeth of the hub (52) in a sliding manner in the axial direction,
- at least one synchronizer ring (56) cooperating with the control sleeve (54), and
- at least one pre-synchronization device (10) housed in a seat (64) of the hub (52) and destined to establish a frictional contact with the synchronizer ring (56),
**characterized in that** the said pre-synchronization device (10) includes a support body (12) that is stationary with respect to the hub (52) and a contact plate that is axially mobile with respect to the support body (12).

2. A synchronizer according to claim 1, **characterized in that** the said pre-synchronization device includes a rolling body (18) partially projecting beyond an opening (16) passing through the through the said contact plate (14), the said rolling body (18) engaging with the internal teeth (68) of said control sleeve (54).

3. A synchronizer according to claim 2, **characterized in that** it includes an elastic element in compression (20) operatively inserted between the support body (12) and the rolling body (18).

4. A synchronizer according to claim 1, **characterized in that** the support body (12) includes at least a pair of restraining tabs (30) suitable for engaging with the hub (52) in a manner to fix the support body (12) on the hub (52) in the direction parallel to the axis of the hub.

5. A synchronizer according to claim 1, **characterized in that** the support body (12) includes a guide part (32) within which the said contact plate (14) is mounted in a manner such that it is free to slide.

6. A synchronizer according to any of the preceding claims, **characterized in that** said support body (12) is a one-piece element obtained by folding a single piece of sheet metal.

7. A synchronizer according to any of the claims 1 to 5, **characterized in that** said support body (12) is a monolithic piece of plastic.

8. A synchronizer according to claim 5, **characterized in that** the said support body (12) includes at least two separate parts that can be fixed together.
